# EUROPEAN PATENT SPECIFICATION

(11) **EP 3 172 950 B1**
(45) Date of publication and mention of the grant of the patent: **07.08.2019**
(21) Application number: 16198029.7
(22) Date of filing: 09.11.2016
(51) Int. Cl.: A01B 1/02

(54) **FOLDING APPARATUS**
FALTVORRICHTUNG
APPAREIL PLIABLE

(30) Priority: 27.11.2015 IT UB20155973
(43) Date of publication of application: 31.05.2017
(73) Proprietor: GI. DI. Meccanica S.p.A., 31028 TV Vazzola (IT)
(72) Inventor: GIUSTI, Dino, 31015 Conegliano (IT)
(74) Representative: Cercenà, Alice

(56) References cited:
- WO-A1-96/41513
- FR-A1- 2 210 338
- US-A- 3 993 340

## Description

### TECHNICAL FIELD OF INVENTION

The present invention refers to a working apparatus, such as for example for manually moving earth or other loose materials, such as sand or snow, that can be folded against itself.

### BACKGROUND OF THE INVENTION

Work implements of various type for manually moving earth have always been used by man in farm work. These tools generally consist of an elongate connecting member, made of wood or metal, to which is connected, at one of the two ends, the actual work tool, generally metallic, having different shapes based on the work to perform. The other end of the connecting member acts as a gripping means to enable the use of the apparatus.

Although the modern world of agriculture is widely mechanized so as to maintain economically acceptable standards of quality, manual tools are still used for tilling plots of land of limited extent, for gardening, or also for minor home maintenance operations.

Implements of this type are also part of the equipment supplied to personnel in the army.

Recently, the market for these implements has also extended to areas other than farming, such as sport fields like mountain climbing and hiking, and has come to include camping equipment.

Consequently, folding work apparatuses that can fit in small places and are designed to be carried even over long distances to their place of intended use are preferable over traditional ones, whose length could hinder their transport.

The folding work apparatuses of the prior art, in their most basic configuration, have a simple articulated joint, generally arranged on the connecting member, and can be folded back so that the tool connected at the other end of the apparatus is positioned above the other end, the one forming the gripping means. Unfortunately, the dimensions of the apparatus, even when folded, are not always sufficiently compact to allow the apparatus to be easily carried, for example inside a backpack.

Document WO96/41513, filed by Fiskars Consumer OY AB, discloses a folding apparatus provided with two articulated joints: a first joint rotatably connects the tool to the connecting member around a first pin, and a second joint rotatably connects the connecting member to the gripping means around a second pin. In this manner, the dimensions of the apparatus in the folded configuration are quite compact.

A drawback observed in an apparatus made in this manner stems from the fact that the joints, in particular the second one which, when in use, is under considerable strain, could fail, and thereby cause the apparatus to accidentally collapse upon itself at an inappropriate moment, with the risk of injuring the user.

This drawback is found in the above-mentioned document, which in fact, to avoid this problem, a sliding sleeve is arranged to protect and reinforce the second joint, to be raised to perform the operations of opening/folding the apparatus, thus making said operations rather complicated and time-wasting.

Moreover, since the strains to which the apparatus is subjected when in actual use affect essentially said hinge pins, in the long run and in conditions of intense use a considerable slack forms between the various component elements, thus hindering the functionality of the apparatus.

Document US3993340 discloses a collapsible chopping spade comprising a shaft with a tool joint at one end and an handle joint at the other end. The spade further comprises a traction element, formed by a compression spring arranged within said shaft and connected with tensioning means formed by a nut, said spring and said nut being adapted to cooperate so that the handle can be folded against the shaft.

### SUMMARY OF THE INVENTION

One objective of the present invention is to overcome the drawbacks of the prior art, by proposing a multifunction apparatus in which at least the gripping means can be folded, but which is sturdy and long-lasting, while allowing a greater degree of freedom in the position of the gripping means so that it can adapt to different modes of operation or to the most comfortable body positions of the user.

In the scope of the above objective, one purpose of the present invention consists of making a folding apparatus that is safe and reliable, that is, it prevents the occurrence of accidental closures of the same while it is being operated.

Another purpose of the present invention consists of obtaining a multifunction apparatus that is completely foldable, such that it can be placed in a very small space when it is not in use, and that it has a particularly compact shape, without protruding portions, so as to make it easy and safe to carry inside a backpack.

Another purpose that the present invention aims to achieve is to provide a multifunction apparatus that can be easily and readily used, allowing it to be opened and folded as simply and as fast as possible.

One not least important purpose is to devise a folding multifunctional apparatus that can be made with the usual well-known plants, machines and equipment.

The above-mentioned task and purposes, and others that will be more evident below, are achieved through the production of an apparatus as defined in claim 1.

### BRIEF DECSRIPTION OF THE FIGURES

Advantages and characteristics of the invention will become more evident from the description given below, by way of example and without limitations, with reference to the enclosed figures, wherein:
- figure 1 is a perspective view of an apparatus according to the present invention in an operating configuration;
- figure 2 shows the apparatus of figure 1 in a side view;
- figure 3 illustrates the apparatus of figure 1, in cross section along plane B-B shown in figure 2;
- figure 4A is an exploded view of an apparatus according to the present invention;
- figure 4B is a further view in cross section of an apparatus according to the present invention;
- figures 5A and 5B illustrate respectively, in perspective views, a further connecting member and a gripping means of an apparatus according to the present invention, and the interposed articulated means;
- figure 6 illustrates an enlarged detail of the exploded view of figure 4A, referring to the upper part of the apparatus according to the present invention;
- figures 7A and 7B illustrate, in perspective views, a tensioning means of an apparatus according to the present invention, in a first and in a second operating position, respectively;
- figure 8 illustrates, in a perspective view, a detail of an actual apparatus according to the present invention;
- figure 9 illustrates an enlarged detail of the exploded view of figure 4A, related to the lower part of the apparatus according to the present invention;
- figures 10A and 10B are perspective views of an apparatus according to the present invention, in an operating configuration of "hoe" type, in which the gripping means is arranged in different positions;
- figure 11 illustrates, in a perspective view, an apparatus according to the present invention arranged in a further operating configuration, and
- figure 12 is a perspective view of the apparatus according to the present invention, arranged in a non-operating configuration, that is, folded against itself.

### BACKGROUND OF THE INVENTION

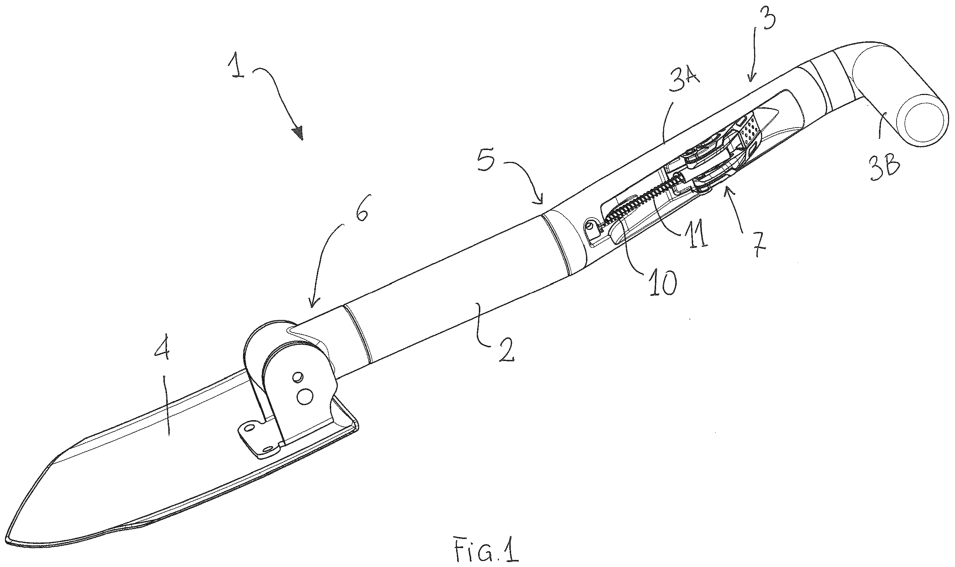

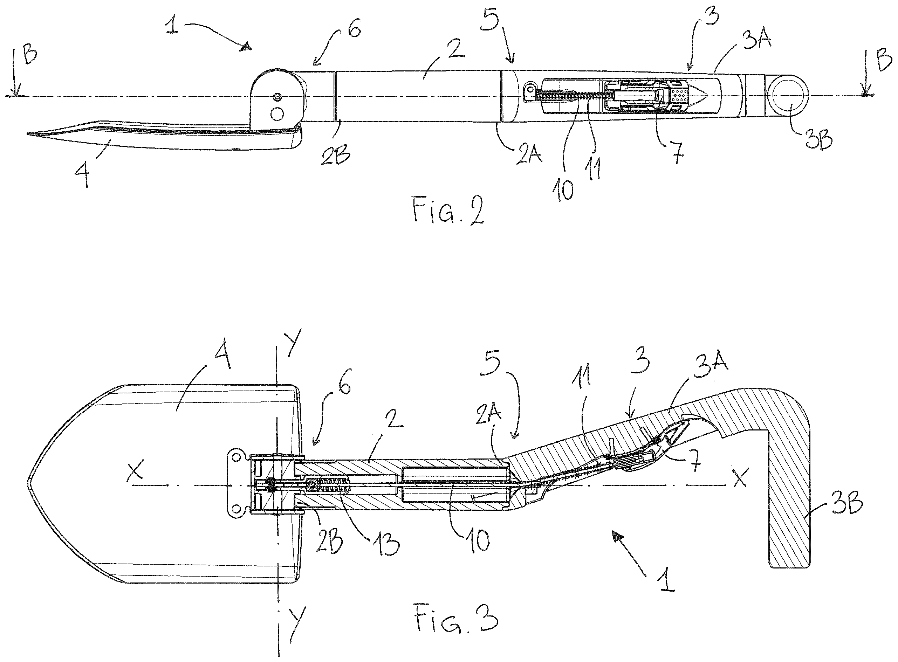

A folding apparatus 1 according to the present invention is illustrated with particular reference to figures 1, 2 and 3.

In the description which follows, words such as "above", "below", "upper", "lower", "high", "low" or similar terms refer to an apparatus 1 in its normal working configuration, as shown in the enclosed figures.

Said apparatus 1 includes a connecting member 2, formed preferably by a hollow tubular body, extending along a first axis X-X, having a first and a second end 2A, 2B to which can be associated respective gripping means 3, such as for example a handgrip, and a tool 4.

In the enclosed figures, the tool 4 has the shape of a shovel used for moving earth, but clearly it can also be in different shapes, such as for example a snow shovel or a pick.

Said handgrip 3 is formed by a rigid body, preferably tubular and advantageously, but not necessarily, being substantially L-shaped, in other words defined by a first portion 3A, through which it is associable to said connecting member 2, and a second portion 3B, extending preferably transversally with respect to said first portion 3A and suitable to be gripped by the user during the use of the apparatus 1.

**As** explained later in greater detail, said apparatus 1 can advantageously have at least one operating configuration, illustrated for example in figure 1, in which said gripping means 3 extends from said connecting member 2 so as to allow the use of the apparatus 1 by the user, and a non-operating, or idle, configuration in which at least said gripping means 3 is folded against said connecting member 2, so as to make it possible to reduce the overall dimensions of the apparatus 1.

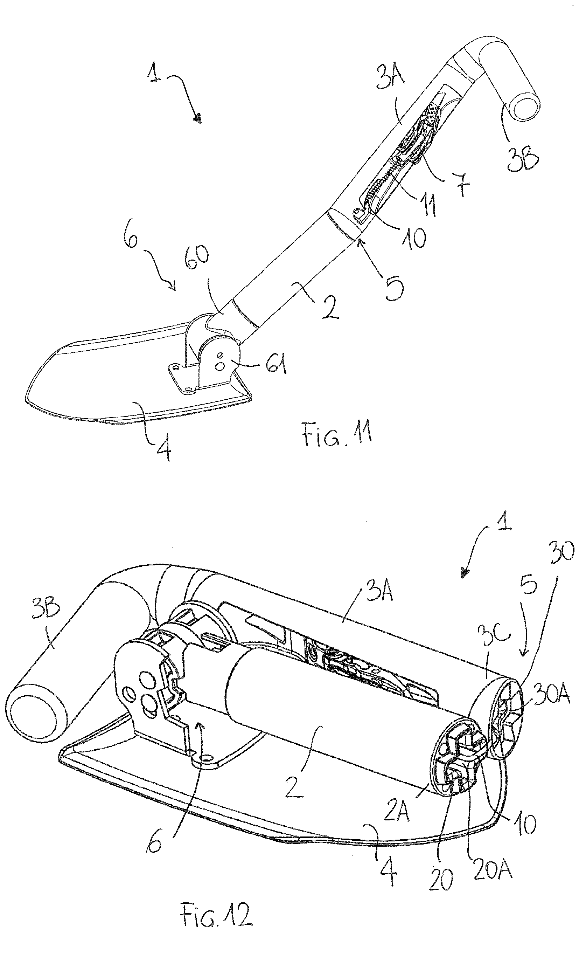

Advantageously, as shown in figure 12, in said non-operating configuration said tool 4 can also if necessary be folded against said connecting member 2, so as to make it possible, for example, to easily insert the apparatus into a backpack.

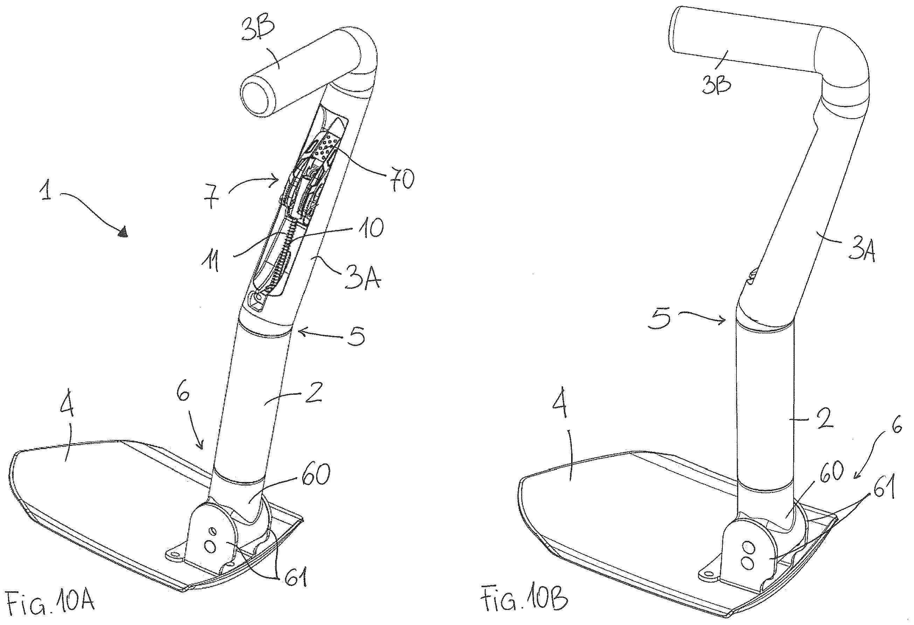

Moreover, as shown in figures 10A, 10B and 11, said apparatus 1 can advantageously assume a plurality of operating configurations, in which the position of said gripping means 3 and/or said tool 4 with respect to said connecting member 2 can be varied to better adapt to different manners of operation or to the specific body configurations of the user.

For example, figures 10A and 10B illustrate the apparatus in an operating configuration of "hoe" type, in which the tool 4 is arranged essentially orthogonally with respect to the extension along said first axis X-X of said connecting member 2; also, in the apparatus 1 shown in figure 10B, the gripping means 3 is rotated by an angle of about 90° around said first axis X-X with respect to the apparatus of figure 10A.

Turning again to figures 1, 2 and 3, said apparatus 1 preferably comprises first articulation means 5 that make it possible to associate said gripping means 3 to a first end portion 2A of said connecting member 2 in an advantageously rotatable manner around said first axis X-X; this is particularly advantageous in the case in which said gripping means 3 is L-shaped, as it makes it possible to orientate the second portion 3B as required.

Further, said first articulation means 5 are suitable to allow said gripping means 3 to be removably connectable to said first end portion 2A, so that it can be folded against said connecting member 2 and arranged folded against the same when said apparatus 1 is in said non-operating configuration.

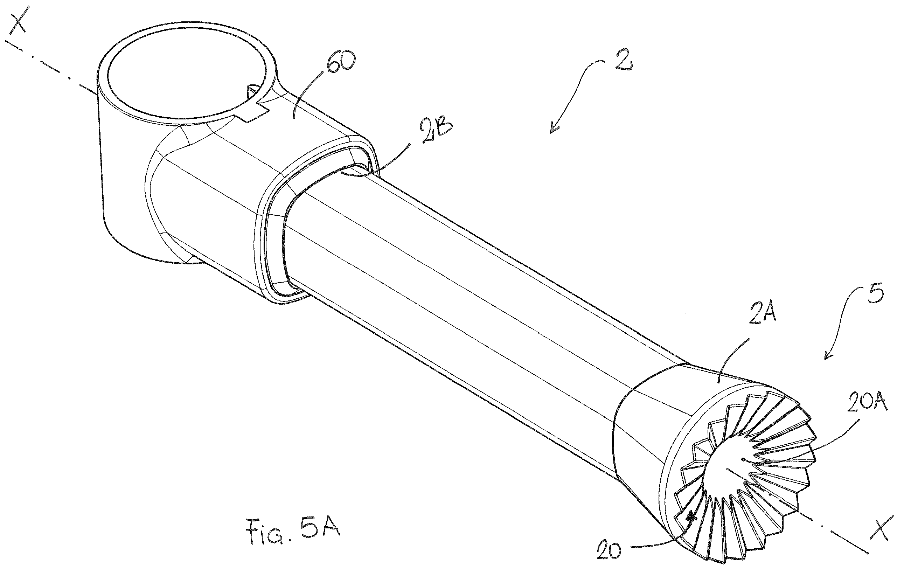

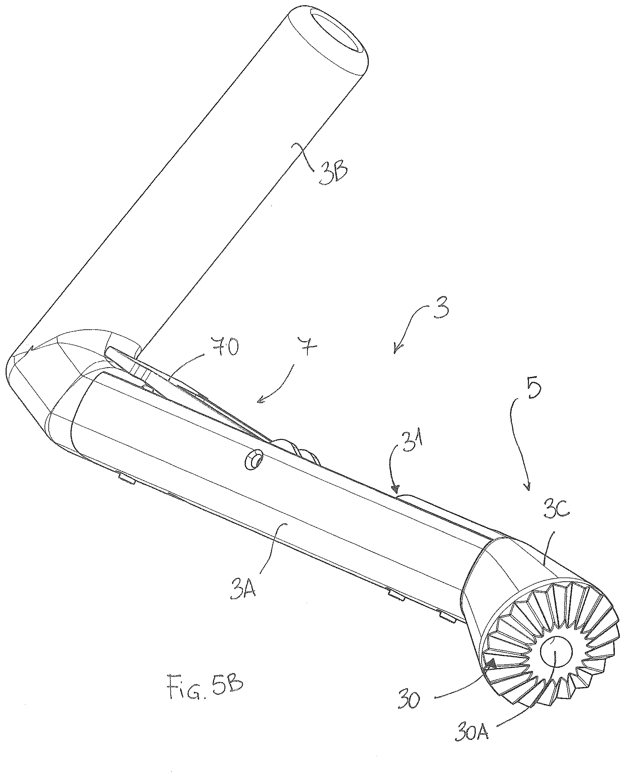

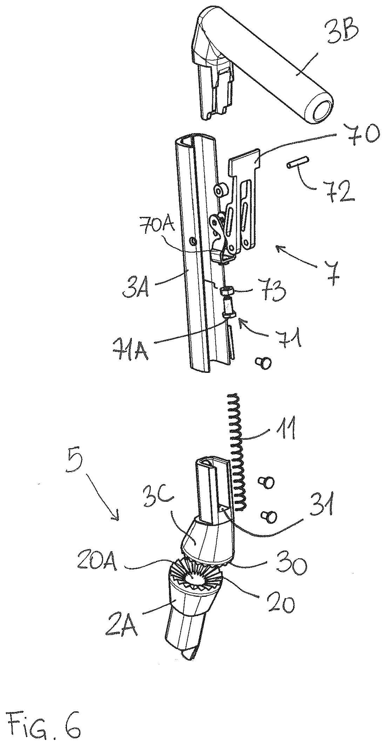

As is better illustrated in figures 5A, 5B and 6, said first articulation means 5 preferably comprise a first and a second interfacing surface 20, 30, both extending essentially orthogonally to said first axis X-X, centrally provided with a through opening 20A, 30A, formed respectively on said connecting member 2 in correspondence with said first end portion 2A, and on an edge portion 3C of said gripping means 3 facing it.

Said first and second interfacing surfaces 20, 30 have, advantageously, mutually conjugated shapes configured so as to rotatably adjust, with discrete rotations around said first axis X-X, the reciprocal position of said connecting member 2 and said gripping means 3 and to allow a removable connection of the same.

For example, said interfacing surfaces 20, 30 can be cross-shaped, as can be seen in figure 12; in this manner, it is possible to rotatably adjust the orientation of the gripping means 3 with respect to the connecting member 2 around said first axis X-X according to four different configurations, staggered 90° with respect to one another.

Alternatively, to obtain a finer adjustment, said interfacing surfaces 20, 30 can be made as shown in particular in figures 5A and 5B, that is, they can include a plurality of radial teeth, arranged preferably equidistantly along mutually conjugate conical surfaces. In this manner, in fact, it is possible to rotatably adjust in a discrete manner around said first axis X-X the position of said gripping means 3 with respect to said connecting member 2 according to a plurality of configurations, essentially determined by the number of teeth provided.

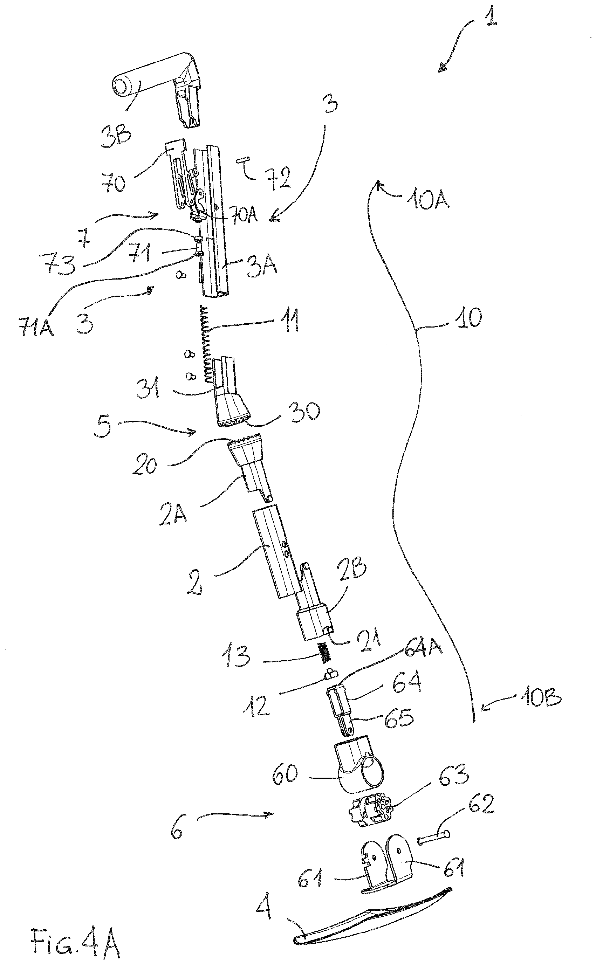

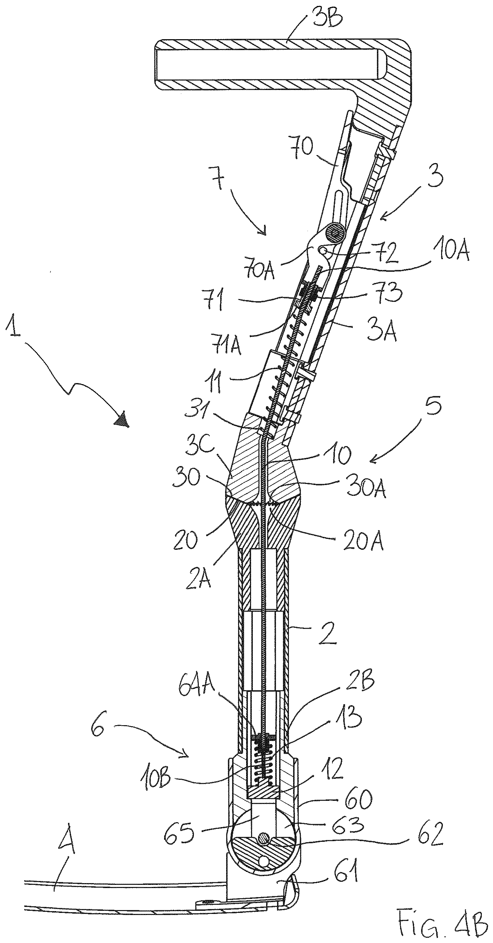

According to a rather advantageous characteristic of the present invention, said apparatus 1 also comprises a traction element 10 such as, in particular, an essentially bidimensional elongate element, as for example a cable advantageously formed by a plurality of preferably helically wound or braided metallic strands, suitable to be at least partially housed inside said connecting member 2 and operatively associated at a first end 10A to tensioning means 7 arranged on said gripping means 3, and at a second end 10B to said second end portion 2B of said connecting member 2 (figures 4A and 4B).

In particular, said tensioning means 7 have at least one first position, wherein the traction element 10 is tensioned so as to fixedly maintain said apparatus 1 in said at least one operating configuration, and a second position, wherein the tension on said traction cable 10 is released to allow said apparatus 1 to be moved from said at least one operating configuration to said non-operating configuration.

Advantageously, said tensioning means 7 consist of a lever comprising a lever arm 70 rotatably coupled to said gripping means 3, and preferably to said first portion 3A of the same.

In particular, said lever arm 70 is coupled on said gripping means 3 around a hinge pin 72, and is operatively connected, if necessary through a linking member 70A, to an engaging bushing 71 to which is firmly coupled said first end 10A of said traction cable 10, preferably through adjusting means 73, such as for example a tension registering nut, through which it is possible to adjust the active length of the traction cable 10 to determine the consequent operating tension.

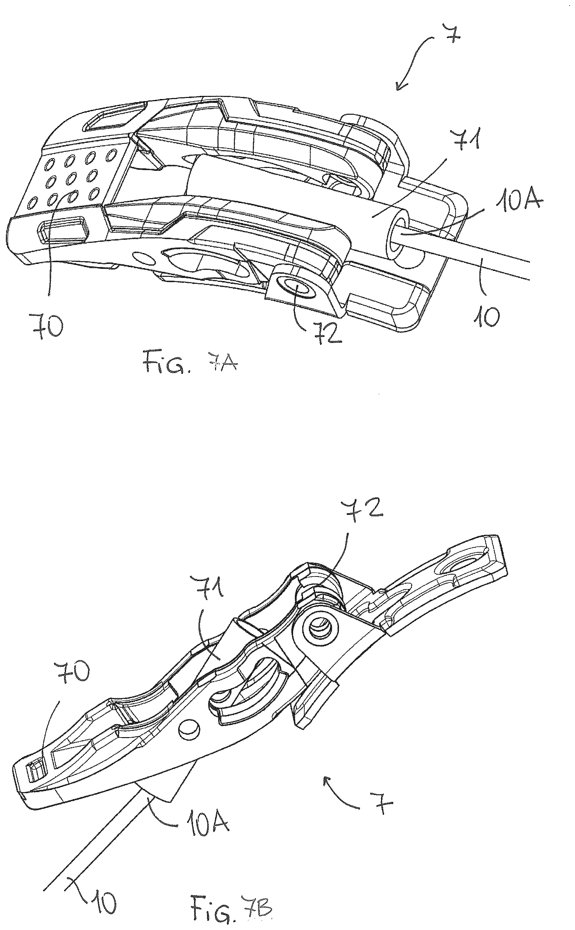

In figures 7A and 7B is illustrated said lever 7 in said first position and in said second position, respectively.

As can be seen in figures 4A and 4B, inside said gripping means 3, adjacent to said lever 7 and coaxially to said traction cable 10, can advantageously be provided a first elastic means 11, such as for example a helical spring, arranged with a predetermined compression preload, with a first end biasing against a stop 71A defined by the bottom edge of said bushing 71 and with the opposite end within a seat 31 formed in the gripping means 3, preferably arranged proximate to the edge portion 3C.

As will be explained later in greater detail, said first elastic means 11 has the function of elastically countering the detachment of said gripping means 3 from said connecting member 2, and of constantly maintaining the respective interfacing surfaces 20, 30 mutually engaged.

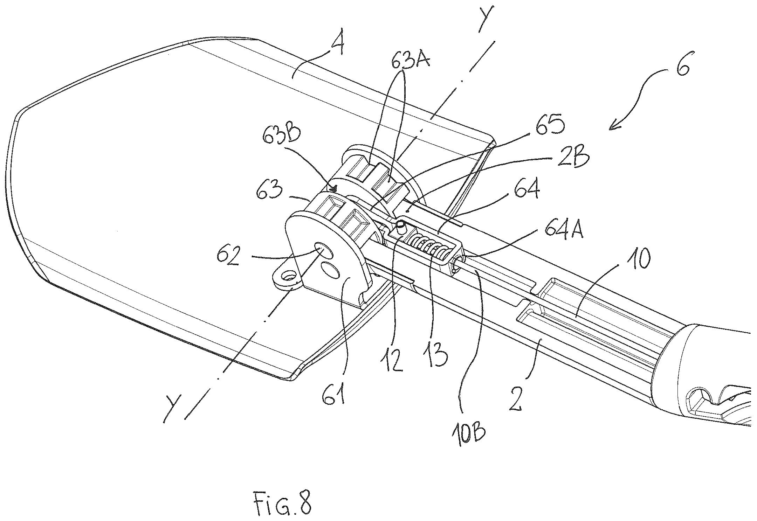

The second end 10B of said traction cable 10 is, on the other hand, preferably connected to a fastening block 12, housed slidingly along said first axis X-X within a fastening body 64 arranged in a cavity formed on said connecting member 2, in correspondence of said second end portion 2B, as can be seen in greater detail in figure 8. If necessary, in correspondence of said second end 10B of said traction cable 10 can also be provided further adjusting means (not shown) to modify the operating tension of the same cable.

Further, within said fastening body 64 can advantageously be provided a second elastic means 13, such as for example a helical spring, positioned coaxially to said traction cable 10 with a predetermined compression preload and biasing with a first end against a bottom wall 64A of said fastening body 64 and with the opposite end against a plane defined by said fastening block 12.

The operation of an apparatus 1 according to the present invention is as follows: when said lever 7 is in said second position (figure 7B), the traction cable 10 is not tensioned, and therefore said gripping means 3 and said connecting member 2 can be disconnected from each other by simply disengaging said interfacing surfaces 20, 30 from their mutual contact in order, for example, to arrange said apparatus 1 in said non-operating configuration, and then folding said gripping means 3 against said connecting member 2, or to rotatably adjust the position of said gripping means 3 with respect to said connecting member 2 around said first axis X-X.

In this condition, said first elastic means 11, if present, opposes a predetermined elastic biasing force against the disengagement of said interfacing surfaces 20, 30, of sufficient intensity to prevent the instantaneous and uncontrolled separation of the gripping means 3 from the connecting member 2, which would make it rather difficult to vary the mutual position, but at the same time this would be easily remedied by the user so that these operations can be more easily carried out in a controlled manner.

Consequently, the separation of said gripping means 3 from said connecting member 2 can be achieved by the user in a controlled manner by simply overcoming the biasing force exerted by said first elastic means 11.

**As** already mentioned, when the lever 7 is in the second position, said apparatus 1 can be arranged in said non-operative configuration, in which the gripping means 3 does not extend directly from the first end 2A of said connecting member 2, as it is arranged folded against the latter, but it is however maintained associated to the same thanks to the action of said traction cable 10, passing through said through openings 20A, 30A, which although its tension is substantially released, it prevents the gripping means 3 from being completely separated from said apparatus 1.

Also, while still maintaining the lever 7 in the second position, it is possible to return the gripping means 3 from the non-operating position, in which it lies folded against said connecting member 2, to an operating position, in which it extends from said end portion 2A of said connecting member 2; this movement is advantageously facilitated by the action of said first elastic means 11, which, when it passes an appropriate dead center, causes a spring return action of said gripping means 3, so that said interfacing surfaces 20, 30 return into mutual engagement.

At this point, the user, maintaining said first and second interfacing surfaces 20, 30 mutually facing each other but disengaged, countering the action of said first elastic means 11, and rotating the gripping means 3 around said axis X-X, can select the most suitable position of the latter with respect to said connecting member 2; once the desired position is reached, the user releases said gripping means 3 so that said first elastic means 11 return said first and second interfacing surfaces 20, 30 into mutual engagement, and causes the rotatable movement of said lever 7 from said second position to said first position by operating on the lever arm 70 (figure 7A).

This movement subjects said traction cable 10 to a predetermined operating tension, which has the effect of causing the apparatus 1 to stiffen in the configuration predetermined by the user and to maintain it stably in such condition.

According to a rather advantageous characteristic of the invention, thanks to its particular configuration, that is, to the fact of being made up of a plurality of braided or helically wound strands, said traction cable 10 is capable of also performing an elastic function and thus of absorbing any impacts and strains that are generated during the use of the apparatus 1. Consequently, this prevents the formation of slacks at least between said gripping means 3 and said connecting member 2.

According to a further advantageous characteristic of the present invention, said tool 4 can also be rotatably associated to said second end 2B of said connecting member 2 through second articulating means 6, advantageously contained inside a hollow T-shaped protection sleeve 60.

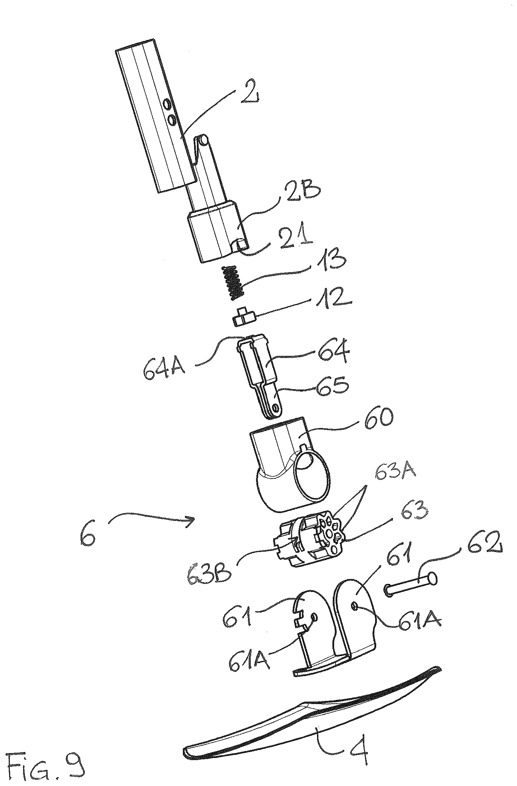

With particular reference to figures 8 and 9, said second articulating means 6 include preferably a pair of shoulders 61, arranged facing each other and jutting parallel to each other from the surface of said tool 4, on which is provided a pair of holes 61A, also arranged facing each other.

In the space included between said pair of shoulders 61 is inserted a hinge pin 62 through said pair of holes 61A, thereby defining a second axis Y-Y, perpendicular to said first axis X-X, around which said tool 4 rotates.

An adjusting roller 63 integral with said tool 4 is arranged between said pair of shoulders 61 essentially coaxially with respect to said hinge pin 62; advantageously, the external surface of said adjusting roller 63 is provided with at least one groove 63A, and preferably a plurality of grooves 63A, extending parallel to said second axis Y-Y; said one or more grooves 63A are substantially continuous, but are essentially interrupted in the central portion of the adjusting roller 63 by a gap 63B, having a depth that makes it possible to access an essentially central portion of the hinge pin 62 to allow the rotatable coupling of said connecting member 2.

In particular, said connecting member 2 can be advantageously connected to said tool 4 through a connecting fork 65, for example formed by a couple of parallel walls extending from said fastening body 64, projecting, when in use, from said second end portion 2B of said connecting member 2 and suitable to be inserted into said gap 63B formed on said adjusting roller 63.

The free ends of said couple of walls are both provided with respective coupling holes with which said connecting fork 65 is rotatably coupled to said hinge pin 62.

Said grooves 63A are thus suitable to be selectively engaged by the end edges 21 (not visible in figure 8 because they are engaged inside the relative grooves 63A), appropriately shaped, of said second end portion 2B, to determine the position/inclination of said tool 4 with respect to said connecting member 2.

Advantageously, this adjusting movement is elastically biased by said second elastic biasing means 13, if present, which is compressed between said fastening block 12 and said bottom wall 64A of said fastening body 64 and thus tends to maintain the end edges 21 of said second end portion 2B in the previously assumed position of engagement with the adjusting roller 63, avoiding the immediate and unrestrained detachment of the tool 4 from said connecting member 2 when the lever 7 is arranged in the second position.

The controlled adjustment of the position of the tool 4 with respect to said connecting member 2 can thus be easily actuated by the user, by simply overcoming the biasing force exerted by said second elastic means 13, by rotating the tool 4 around said second axis Y-Y until the desired position is reached and then inserting the end edges 21 of said second end portion2B into the corresponding grooves 63A of said adjusting roller 63.

This position is stably maintained by rotatably moving said lever 7 from said second position to said first position for tensioning said traction cable 10, as previously illustrated.

In conclusion, from the above it is evident how the present invention achieves the initially foreseen purposes and advantages. In fact, an apparatus was devised in which at least the gripping means can be folded without the use of an articulating pin, thanks to the system formed by a traction cable 10 and tensioning means 7, thus eliminating the problems found in the prior art devices.

It can also be noted how in an apparatus according to the present invention all the impacts and strains that occur during normal use are completely absorbed by said traction cable, thus preventing the formation of slacks between the various component parts.

Advantageously, the apparatus according to the present invention is, as a result, rather sturdy, durable and offers at the same time a greater degree of freedom in positioning the gripping means to better adapt to the different modes of operation or to specific comfortable body positions of the user.

Moreover, it will be evident how a folding apparatus according to the present invention is safe and reliable, that is, how it prevents the occurrence of accidental closures of the same during its operation.

**An** apparatus according to the present invention can also be completely folded against itself, thus becoming quite compact so that it can be placed in a very small space when not in use.

Finally, an apparatus according to the present invention is one of easy and immediate use, thanks to the simplicity and speed of the operations to carry out to obtain the desired positioning of the gripping means and the tool with respect to said connecting member.

Naturally, the invention is susceptible of numerous modifications or variants without thereby departing from the scope of patent protection of the present invention, as defined by any one of the enclosed claims.

Further, the materials used for implementing the present invention, as well as the shapes and dimensions of the individual components, can be the most suitable according to the specific requirements.

## Claims

1. Apparatus (1) comprising a tool (4), gripping means (3) and a hollow connecting member (2) extending along a first axis (X-X), said gripping means (3) being associable with a first end portion (2A) of said connecting member (2), said tool (4) being associated with a second end portion (2B) of said connecting member (2), said apparatus (1) being able to assume a non-operating configuration, wherein at least said gripping means (3) are arranged close to said connecting member (2), and at least one operating configuration, wherein said gripping means (3) extend from said first end portion (2A) of said connecting member (2), said apparatus (1) further comprising a traction element (10), extending within said connecting member (2) and connected with a first end (10A) to tensioning means (7) adapted to be moved between a first position, wherein said traction element (10) is tensioned so as to maintain said at least one operating configuration of said tool (1), and a second position, wherein the tension on said traction element (10) is released so as to allow said apparatus (1) to be moved between said at least one operating configuration and said non-operating configuration, **characterized in that** said gripping means (3) are removably connected to said connecting member (2) by means of said traction element (10), said tensioning means (7) being arranged on said gripping means (3) and being associated through a second end (10B) with said second end portion (2B) of said connecting member (2).

2. Apparatus (1) according to claim 1, wherein first articulating means (5) are provided, said first articulation means (5) comprising a first and a second interfacing surfaces (20, 30) both extending orthogonally with respect to said first axis (X-X) and being respectively obtained in correspondence to said first end portion (2A) of said connecting member (2) and on an edge portion (3C) of said gripping means (3), said first and second interfacing surfaces (20, 30) having mutually conjugate shapes being configured so as to allow the adjustment of the position of said gripping means (3) with respect to said connecting member (2) around said first axis (X-X).

3. Apparatus (1) according to claim 2, wherein each of said first and second interfacing surfaces (20, 30) comprises a plurality of radial teeth arranged equidistant to each other along mutually conjugate conical surfaces.

4. Apparatus (1) according to claim 2 or 3, wherein first elastic means (11) are arranged inside said gripping means (3) coaxially to said traction element (10) and with a predetermined compression preload so as to elastically bias the detachment of said gripping means (3) from said connecting member (2) and to maintain said first and second interfacing surfaces (20, 30) mutually engaged when said tensioning means (7) are in said second position.

5. Apparatus (1) according to any one of the preceding claims, wherein said traction element (10) comprises a traction cable formed by a plurality of helically wound or braided strands.

6. Apparatus (1) according to any one of the preceding claims, wherein said tensioning means (7) are formed by a lever comprising a lever arm (70), rotatably coupled to said gripping means (3), and an engaging bushing (71), operatively associated with said lever arm (70), whereon said first end (10A) of said traction element (10) is firmly engaged.

7. Apparatus (1) according to claim 6, wherein said tensioning means (7) further comprise adjusting means (73) adapted to cooperate with said engaging bushing (71) for adjusting the active length of said traction element (10).

8. Apparatus (1) according to any one of the preceding claims, wherein said tool (4) is rotatably associated with said second end portion (2B) of said connecting member (2) around a second axis (Y-Y) perpendicular to said first axis (X-X) through second articulating means (6).

9. Apparatus (1) according to claim 8, wherein said second articulating means (6) comprise an adjusting roller (63) mounted integral with said tool (4) and coaxially with respect to said second axis (Y-Y), the outer surface of said adjusting roller (63) being provided with at least one groove (63A) extending parallel to said second axis (Y-Y) and adapted to cooperate with shaped edges (21) of said second end portion (2B) to define the inclination of said tool (4) with respect to said connecting member (2).

10. Apparatus (1) according to claim 9, wherein second elastic means (13) are arranged within a fastening body (64) with a predetermined compression preload and coaxially with respect to said traction element (10), said fastening body (64) being housed in correspondence of said second end portion (2B) of said connecting member (2) and connected to said second end (10B) of said traction element (10), said second elastic means (13) being adapted to elastically bias the detachment of said shaped edges (21) of said second end portion (2B) from said adjusting roller (63) when said tensioning means (7) are disposed in said second position.

## Patentansprüche

1. Vorrichtung (1) mit einem Werkzeug (4), einer Greifeinrichtung (3) und einem hohlen Verbindungselement (2), das sich entlang einer ersten Achse (X-X) erstreckt, wobei die Greifeinrichtung (3) mit einem ersten Endbereich (2A) des Verbindungselements (2) verbindbar ist, das Werkzeug (4) mit einem zweiten Endbereich (2B) des Verbindungselements (2) verbunden ist, wobei die Vorrichtung (1) ausgebildet ist, eine Nicht-Betriebsstellung, in der mindestens die Greifeinrichtung (3) angeordnet ist, das Verbindungselement (2) zu schließen, und mindestens eine Betriebsstellung einzunehmen, in der sich die Greifeinrichtung (3) von dem ersten Endbereich (2A) zu dem Verbindungselement (2) erstreckt, wobei die Vorrichtung (1) ferner ein Traktionselement (10) aufweist, das sich innerhalb des Verbindungselements (2) erstreckt und mit einem ersten Ende (10A) mit einer Spanneinrichtung (7) verbunden ist, die ausgebildet ist, zwischen einer ersten Stellung, in der das Traktionselement (10) so gespannt ist, dass mindestens eine Betriebsstellung des Werkzeugs (1) beibehalten wird, und einer zweiten Stellung bewegbar ist, in der die Spannung auf das Traktionselement (10) freigegeben wird, sodass die Vorrichtung (1) zwischen der mindestens einen Betriebsstellung und der Nicht-Betriebsstellung bewegbar ist,
**dadurch gekennzeichnet, dass**
die Greifeinrichtung (3) durch das Traktionselement (10) abnehmbar mit dem Verbindungselement (2) verbunden ist, die Spanneinrichtung (7) auf der Greifeinrichtung (3) angeordnet und über ein zweites Ende (10B) mit dem zweiten Endbereich (2B) des Verbindungselements (2) verbunden ist.

2. Vorrichtung (1) nach Anspruch 1, wobei eine erste Gelenkeinrichtung (5) vorgesehen ist und die erste Gelenkeinrichtung (5) eine erste und eine zweite Verbindungsfläche (20, 30) aufweist, die sich beide senkrecht in Bezug auf die erste Achse (X-X) erstrecken und jeweils korrespondierend zu dem ersten Endbereich (2A) des Verbindungselements (2) auf einem Randbereich (3C) der Greifeinrichtung (3) erhalten werden, wobei die erste und die zweite Verbindungsfläche (20, 30) zueinander komplementäre Formen haben, die so gestaltet sind, dass sie die Verstellung der Position der Greifeinrichtung (3) in Bezug auf das Verbindungselement (2) um die erste Achse (X-X) herum ermöglichen.

3. Vorrichtung (1) nach Anspruch 2, wobei die erste und die zweite Verbindungsfläche (20, 30) jeweils mehrere radiale Zähne aufweisen, die entlang zueinander komplementärer konischer Flächen mit gleichem Abstand zueinander angeordnet sind.

4. Vorrichtung (1) nach Anspruch 2 oder 3, wobei eine erste elastische Einrichtung (11) innerhalb der Greifeinrichtung (3) koaxial zu dem Traktionselement (10) und mit einer vorbestimmten Vor-Komprimierungslast so angeordnet ist, dass beim Abnehmen der Greifeinrichtung (3) von dem Verbindungselement (2) ein elastisches Vorspannen erfolgt und die erste und die zweite Verbindungsfläche (20, 30) miteinander in Eingriff gehalten werden, wenn die Spanneinrichtung (7) in der zweiten Stellung ist.

5. Vorrichtung (1) nach einem der vorhergehenden Ansprüche, wobei das Traktionselement (10) ein Traktionsseil aufweist, das durch mehrere spiralförmig gewickelte oder geflochtene Litzen gebildet ist.

6. Vorrichtung (1) nach einem der vorhergehenden Ansprüche, wobei die Spanneinrichtung (7) durch einen Hebel mit einem Hebelarm (70), der drehbar mit der Greifeinrichtung (3) verbunden ist, und einer Eingriffsbuchse (71) gebildet ist, die funktionsmäßig mit dem Hebelarm (70) verbunden ist, auf welchem das erste Ende (10A) des Traktionselements (10) fest im Eingriff ist.

7. Vorrichtung (1) nach Anspruch 6, wobei die Spanneinrichtung (7) ferner eine Justiereinrichtung (73) aufweist, die ausgebildet ist, mit der Eingriffsbuchse (71) zum Einstellen der wirksamen Länge des Traktionselements (10) zusammenzuwirken.

8. Vorrichtung (1) nach einem der vorhergehenden Ansprüche, wobei das Werkzeug (4) mit dem zweiten Endbereich (2B) des Verbindungselements (2) um eine zweite Achse (Y-Y), die senkrecht zu der ersten Achse (X-X) ist, über eine zweite Gelenkeinrichtung (6) drehbar verbunden ist.

9. Vorrichtung (1) nach Anspruch 8, wobei die zweite Gelenkeinrichtung (6) eine Justierrolle (63) aufweist, die zusammen mit dem Werkzeug (4) montiert und Bezug auf die zweite Achse (Y-Y) koaxial ist, wobei die Außenfläche der Justierrolle (63) mit mindestens einer Nut (63A) versehen ist, die sich parallel zu der zweiten Achse (Y-Y) erstreckt und geeignet ist, mit geformten Rändern (21) des zweiten Endbereichs (2B) so zusammenzuwirken, dass die Neigung des Werkzeugs (4) in Bezug auf das Verbindungselement (2) festgelegt ist.

10. Vorrichtung (1) nach Anspruch 9, wobei eine zweite elastische Einrichtung (13) in einem Befestigungskörper (64) mit einer vorbestimmten Vor-Komprimierungslast und koaxial in Bezug auf das Traktionselement (10) angeordnet ist, wobei der Befestigungskörper (64) korrespondierend zu dem zweiten Endbereich (2B) des Verbindungselements (2) untergebracht und mit dem zweiten Ende (10B) des Traktionselements (10) verbunden ist, wobei die zweite elastische Einrichtung (13) ausgebildet ist, beim Abnehmen der geformten Ränder (21) des zweiten Endbereichs (2B) von der Justierrolle (63) ein elastisches Vorspannen auszuführen, wenn die Spanneinrichtung (7) in der zweiten Stellung angeordnet ist.

## Revendications

1. Appareil (1) comprenant un outil (4), des moyens de préhension (3) et un élément de connexion (2) creux s'étendant le long d'un premier axe (X-X), lesdits moyens de préhension (3) pouvant être associés à une première partie d'extrémité (2A) dudit élément de connexion (2), ledit outil (4) étant associé à une seconde partie d'extrémité (2B) dudit élément de connexion (2), ledit appareil (1) pouvant prendre une configuration non opérationnelle, dans lequel au moins lesdits moyens de préhension (3) sont disposés à proximité dudit élément de connexion (2) et au moins une configuration opérationnelle, dans laquelle lesdits moyens de préhension (3) s'étendent depuis ladite première partie d'extrémité (2A) dudit élément de connexion (2), ledit appareil (1) comprenant en outre un élément de traction (10), s'étendant à l'intérieur dudit élément de connexion (2) et étant relié à une première extrémité (10A) à des moyens de tension (7) agencés pour être déplacés entre une première position, dans laquelle ledit élément de traction (10) est tendu de manière à maintenir ladite au moins une configuration opérationnelle dudit appareil (1), et une seconde position , dans laquelle la tension de l'élément de traction (10) est relâchée de manière à permettre le déplacement dudit appareil (1) entre ladite au moins une configuration opérationnelle et ladite configuration non opérationnelle, **caractérisé en ce que** lesdits éléments de préhension (3) sont connectés de manière amovible audit élément de connexion (2) au moyen dudit élément de traction (10), lesdits moyens de tension (7) étant agencés sur lesdits moyens de préhension (3) et étant associés par une seconde extrémité (10B) à ladite seconde partie d'extrémité (2B) dudit élément de connexion (2).

2. Appareil (1) selon la revendication 1, dans lequel sont prévus des premiers moyens d'articulation (5), lesdits premiers moyens d'articulation (5) comprenant une première et une seconde surfaces d'interfaçage (20, 30) s'étendant toutes les deux orthogonalement par rapport audit premier axe (X-X) et étant respectivement obtenus en correspondance avec ladite première partie d'extrémité (2A) dudit élément de connexion (2) et sur une partie de bord (3C) desdits moyens de préhension (3), lesdites première et seconde surfaces d'interfaçage (20, 30) ayant des formes mutuellement conjuguées étant configurées de manière à permettre le réglage de la position desdits moyens de préhension (3) par rapport audit élément de connexion (2) autour dudit premier axe (X-X).

3. Appareil (1) selon la revendication 2, dans lequel chacune desdites première et seconde surfaces d'interfaçage (20, 30) comprennent une pluralité de dents radiales agencées à égale distance les unes des autres le long de surfaces coniques mutuellement conjuguées.

4. Appareil (1) selon la revendication 2 ou 3, dans lequel des premiers moyens élastiques (11) sont agencés à l'intérieur desdits moyens de préhension (3) coaxialement audit élément de traction (10) et avec une précharge de compression prédéterminée de manière à solliciter élastiquement le détachement desdits moyens de préhension (3) dudit élément de connexion (2) et pour maintenir lesdites première et seconde surfaces d'interfaçage (20, 30) mutuellement en prise lorsque lesdits moyens de tension (7) sont dans ladite seconde position.

5. Appareil (1) selon l'une quelconque des revendications précédentes, dans lequel ledit élément de traction (10) comprend un câble de traction formé par une pluralité de brins enroulés en hélice ou tressés.

6. Appareil (1) selon l'une quelconque des revendications précédentes, dans lequel lesdits moyens de tension (7) sont formés par un levier comprenant un bras de levier (70), couplé de manière rotative auxdits moyens de préhension (3), et une bague d'engagement (71), associée de manière opérationnelle audit bras de levier (70), sur laquelle ladite première extrémité (10A) dudit élément de traction (10) est fermement engagée.

7. Appareil (1) selon la revendication 6, dans lequel lesdits moyens de tension (7) comprennent en outre un moyen de réglage (73) apte à coopérer avec ladite bague d'engagement (71) pour régler la longueur active dudit élément de traction (10).

8. Appareil (1) selon l'une quelconque des revendications précédentes, dans lequel ledit outil (4) est associé de manière rotative à ladite seconde partie d'extrémité (2B) dudit élément de connexion (2) autour d'un second axe (Y-Y) perpendiculaire audit premier axe (X-X) à travers des seconds moyens d'articulation (6).

9. Appareil (1) selon la revendication 8, dans lequel lesdits seconds moyens d'articulation (6) comprennent un rouleau de réglage (63) monté d'un seul tenant avec ledit outil (4) et coaxialement par rapport audit second axe (Y-Y), la surface extérieure dudit rouleau de réglage (63) étant pourvu d'au moins une gorge (63A) s'étendant parallèlement audit second axe (Y-Y) et apte à coopérer avec des bords profilés (21) de ladite seconde partie d'extrémité (2B) pour définir l'inclinaison dudit outil (4) par rapport audit élément de connexion (2).

10. Appareil (1) selon la revendication 9, dans lequel des seconds moyens élastiques (13) sont agencés dans un corps de fixation (64) avec une précharge de compression prédéterminée et coaxialement par rapport audit élément de traction (10), ledit corps de fixation (64) étant logé en correspondance de ladite seconde partie d'extrémité (2B) dudit élément de connexion (2) et connecté à ladite seconde extrémité (10B) dudit élément de traction (10), ledit second moyen élastique (13) étant adapté pour solliciter élastiquement le détachement desdits bords profilés (21) de ladite seconde partie d'extrémité (2B) provenant dudit rouleau de réglage (63) lorsque lesdits moyens de tension (7) sont disposés dans ladite seconde position.
